# EUROPEAN PATENT SPECIFICATION

(11) **EP 3 312 447 B1**
(45) Date of publication and mention of the grant of the patent: **04.09.2019**
(21) Application number: 17190639.9
(22) Date of filing: 12.09.2017
(51) Int. Cl.: F16D 48/06, F16D 48/02

(54) **CLUTCH OPERATING APPARATUS**
KUPPLUNGSBETÄTIGUNGSVORRICHTUNG
APPAREIL DE COMMANDE D'EMBRAYAGE

(30) Priority: 18.10.2016 JP 2016204313
(43) Date of publication of application: 25.04.2018
(73) Proprietor: TOYOTA JIDOSHA KABUSHIKI KAISHA, Toyota-shi, Aichi-ken, 471-8571 (JP)
(72) Inventor: OHKI, Takao, TOYOTA-SHI, AICHI-KEN, 471-8571 (JP); ICHIKAWA, Akihiko, TOYOTA-SHI, AICHI-KEN, 471-8571 (JP); MURAOKA, Junichi, TOYOTA-SHI, AICHI-KEN, 471-8571 (JP); INATA, Kazunari, TOYOTA-SHI, AICHI-KEN, 471-8571 (JP); TSURUMI, Yukinori, TOYOTA-SHI, AICHI-KEN, 471-8571 (JP)
(74) Representative: Intès, Didier Gérard André

(56) References cited:
- EP-A1- 2 846 059
- DE-A1- 4 121 016
- DE-A1-102014 001 073
- JP-A- 2009 222 068

## Description

### BACKGROUND OF THE INVENTION

### 1. Field of the Invention

The invention relates to a clutch operating apparatus that operates a clutch device arranged in a power transmission path between an engine and a transmission in a vehicle, and control method for clutch operating apparatus.

### 2. Description of Related Art

Conventionally, as described in Japanese Patent Application Publication No. 2012-112499 (JP 2012-112499 A), there is known a clutch operating apparatus that operates a clutch device arranged in a power transmission path between an engine (internal combustion engine) and a transmission with the use of the hydraulic pressure of working oil that is supplied to the clutch device.

The clutch operating apparatus includes a clutch actuator including a hydraulic cylinder. The driver's operation amount (depression amount) of a clutch pedal is detected by a clutch pedal stroke sensor. The clutch actuator is controlled in accordance with an output signal from the clutch pedal stroke sensor. Hydraulic pressure that is supplied from the hydraulic cylinder to the clutch device is adjusted through control over the clutch actuator. Thus, an engagement status of the clutch device commensurate with the operation amount of the clutch pedal is obtained. A clutch system including such a clutch operating apparatus is generally called clutch-by-wire system.

### SUMMARY OF THE INVENTION

However, in the existing clutch-by-wire system, if the clutch actuator, the clutch pedal stroke sensor, or the like, malfunctions and there occurs an abnormality in the operation of the clutch actuator, the clutch device does not work in response to the operation amount of the clutch pedal.

The invention provides a clutch operating apparatus that allows a clutch device to work in response to an operation amount of a clutch pedal even when there is an abnormality in the operation of a clutch actuator
An aspect of the invention provides a clutch operating apparatus. The clutch operating apparatus is configured to operate a clutch device between an engaged state and a released state by adjusting a fluid pressure inside a fluid pressure chamber of the clutch device. The clutch device is arranged in a power transmission path between an engine and a transmission. The clutch operating apparatus includes a clutch actuator, a clutch pedal, a first path, a second path, a switching mechanism and an electronic control unit. The clutch pedal is configured to be operated by a driver. The first path is configured to adjust the fluid pressure by causing working fluid to flow into or out of the fluid pressure chamber through an operation of the clutch actuator. The second path is configured to adjust the fluid pressure by causing working fluid to flow into or out of the fluid pressure chamber with the use of control force on the clutch pedal. The switching mechanism is configured to switch a path for working fluid to communicate with the fluid pressure chamber between the first path and the second path. The electronic control unit is configured to, when the electronic control unit determines that there is an abnormality in the operation of the clutch actuator, control the switching mechanism such that the path for working fluid to communicate with the fluid pressure chamber is switched from the first path to the second path. An aspect of the invention provides a control method for a clutch operating apparatus configured to operate a clutch device between an engaged state and a released state by adjusting a fluid pressure inside a fluid pressure chamber of the clutch device, the clutch device being arranged in a power transmission path between an engine and a transmission. The clutch operating apparatus includes a clutch actuator; a clutch pedal configured to be operated by a driver; a first path configured to adjust the fluid pressure by causing working fluid to flow into or out of the fluid pressure chamber through an operation of the clutch actuator; a second path configured to adjust the fluid pressure by causing working fluid to flow into or out of the fluid pressure chamber with the use of control force on the clutch pedal; a switching mechanism configured to switch a path for working fluid to communicate with the fluid pressure chamber between the first path and the second path; and an electronic control unit. The control method includes, by the electric control unit, controlling the switching mechanism such that the path for working fluid to communicate with the fluid pressure chamber is switched from the first path to the second path, when the electronic control unit determines that there is an abnormality in the operation of the clutch actuator.

With this configuration, when it is determined that there is an abnormality in the operation of the clutch actuator, the switching mechanism is controlled so as to switch the path for working fluid to communicate with the fluid pressure chamber from the first path to the second path. Thus, fluid pressure that is obtained from driver's control force on the clutch pedal is allowed to be supplied to the fluid pressure chamber of the clutch device, so the clutch device becomes operable. That is, even when there is an abnormality in the operation of the clutch actuator, the clutch device is able to work in response to the operation amount of the clutch pedal.

In the above aspect, the clutch operating apparatus may further include a reaction generation mechanism and a third path. The reaction generation mechanism may be configured to generate reaction force against control force on the clutch pedal with the use of flow of working fluid. The third path may be configured to cause working fluid to flow into or out of the reaction generation mechanism with the use of control force on the clutch pedal. The switching mechanism may be configured to switch the third path between a communication state and an interruption state. The electronic control unit may be configured to control the switching mechanism such that the third path is switched from the communication state to the interruption state, when the electronic control unit determines that there is an abnormality in the operation of the clutch actuator.

With this configuration, when it is determined that there is no abnormality in the operation of the clutch actuator, the third path is set to the communication state by the switching mechanism. Thus, when the clutch pedal is operated by the driver while the clutch device is operated through the first path, reaction force against the control force is allowed to be generated by the reaction generation mechanism. For this reason, the driver operates the clutch pedal while receiving reaction force from the reaction generation mechanism, so the driver operates the clutch pedal without a feeling of strangeness. On the other hand, when it is determined that there is an abnormality in the operation of the clutch actuator, the third path is set to the interruption state by the switching mechanism. That is, the clutch device is set so as to be operated through the second path, and then a path for working fluid between the clutch pedal and the reaction generation mechanism is interrupted. Thus, no reaction force acts on the clutch pedal from the reaction generation mechanism, so driver's control force on the clutch pedal may be set to necessary minimum force for operating the clutch device, with the result that deterioration of the operability of the clutch pedal is suppressed.

In the above aspect, the switching mechanism may include a first port, a second port, a third port, and a fourth port. The first port may be connected to the clutch actuator via a path for working fluid. The second port may be connected to the clutch pedal via a path for working fluid. The third port may be connected to the reaction generation mechanism via a path for working fluid. The fourth port may be connected to the fluid pressure chamber of the clutch device via a path for working fluid. The electronic control unit may be configured to, when the electronic control unit determines that there is no abnormality in the operation of the clutch actuator, communicate the fourth port with the first port and communicate the second port with the third port. The electronic control unit may be configured to, when the electronic control unit determines that there is an abnormality in the operation of the clutch actuator, communicate the fourth port with the second port and interrupt each of the first port and the third port from any of the other ports.

With this configuration, when it is determined that there is no abnormality in the operation of the clutch actuator, the fourth port and first port of the switching mechanism communicate with each other, so the fluid pressure chamber of the clutch device and the clutch actuator communicate with each other via a path for working fluid. When the second port and the third port communicate with each other, the clutch pedal and the reaction generation mechanism communicate with each other via a path for working fluid. Thus, as described above, it is possible to operate the clutch device through the operation of the clutch actuator (it is possible to operate the clutch device by utilizing the first path), and it is possible to obtain reaction force against driver's control force on the clutch pedal from the reaction generation mechanism. On the other hand, when it is determined that there is an abnormality in the operation of the clutch actuator, the fourth port and second port of the switching mechanism communicate with each other, so the fluid pressure chamber of the clutch device and the clutch pedal communicate with each other via a path for working fluid. Thus, by supplying the fluid pressure chamber of the clutch device with fluid pressure that is obtained from driver's control force on the clutch pedal, the clutch device becomes operable (the clutch device becomes operable by utilizing the second path). Since each of the first port and the third port is interrupted from any of the other ports, each of the path that connects with the clutch actuator and the path that connects with the reaction generation mechanism is interrupted. Therefore, it is possible to prevent adverse effect due to a malfunction of the clutch actuator, and it is possible to suppress an excessive increase in control force on the clutch pedal, required of the driver.

In the above aspect, the electronic control unit may be configured to, when a predetermined coasting start condition is satisfied when a vehicle is traveling under a situation in which the clutch device is engaged in a state where the clutch device is operated while the first path is communicated with the fluid pressure chamber, release the clutch device by operating the clutch actuator. The electronic control unit may be configured to, when coasting has continued for a predetermined time after the coasting is started by the coasting control unit, switch the switching mechanism such that the first path is interrupted.

With this configuration, when the coasting start condition is satisfied, the electronic control unit releases the clutch device by operating the clutch actuator. Thus, coasting is started. After that, when the coasting has continued for the predetermined time, the electronic control unit interrupts the first path. Thus, working fluid is enclosed in the path between the switching mechanism and the fluid pressure chamber of the clutch device, and fluid pressure in the path is maintained. For this reason, the released state of the clutch device is maintained without continuation of the operation of the clutch actuator (the operation of the clutch actuator for maintaining fluid pressure that is supplied to the fluid pressure chamber of the clutch device), so it is possible to continue coasting. As a result, it is possible to significantly reduce energy consumption amount that is required to operate the clutch actuator.

According to the aspect of the invention, the first path that adjusts fluid pressure by causing working fluid to flow into or out of the fluid pressure chamber of the clutch device through the operation of the clutch actuator and the second path that adjusts fluid pressure by causing working fluid to flow into or out of the fluid pressure chamber of the clutch device with the use of control force on the clutch pedal are provided. When it is determined that there is an abnormality in the operation of the clutch actuator, the path for working fluid to communicate with the fluid pressure chamber is switched from the first path to the second path. For this reason, even when there is the abnormality, it is possible to operate the clutch device in response to the operation amount of the clutch pedal.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view that shows the schematic configuration of a powertrain and control system of a vehicle according to an embodiment;
FIG. 2 is a view that shows the overall schematic configuration of a clutch system according to the embodiment;
FIG. 3 is a block diagram that shows the configuration of a control system associated with an engine ECU and a clutch ECU according to the embodiment;
FIG. 4 is a flowchart that shows the procedure of a switching operation of a switching mechanism according to the embodiment;
FIG. 5 is a view that shows the overall schematic configuration of a clutch system according to an alternative embodiment; and
FIG. 6 is a block diagram that shows the configuration of a control system associated with the engine ECU and the clutch ECU according to the alternative embodiment.

### DETAILED DESCRIPTION OF EMBODIMENTS

Hereinafter, an embodiment of the invention will be described with reference to the accompanying drawings. The present embodiment refers to the case where the invention is applied to a front-engine front-drive (FF) vehicle.

### Configuration of Powertrain

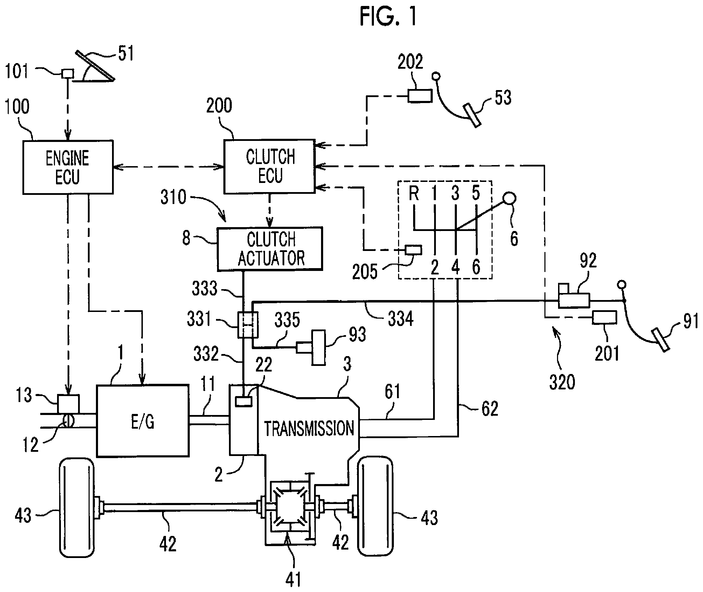

FIG. 1 is a view that shows the schematic configuration of a powertrain and control system of the vehicle according to the present embodiment. As shown in FIG. 1, a clutch device 2 is arranged in a power transmission path between a crankshaft 11 and a transmission (manual transmission) 3. The crankshaft 11 is the output shaft of an engine 1. The output side of the transmission 3 is coupled to drive wheels 43 via a differential gear 41 and drive shafts 42.

The engine 1 is an internal combustion engine, such as a gasoline engine. The engine 1 is controlled by an engine ECU 100.

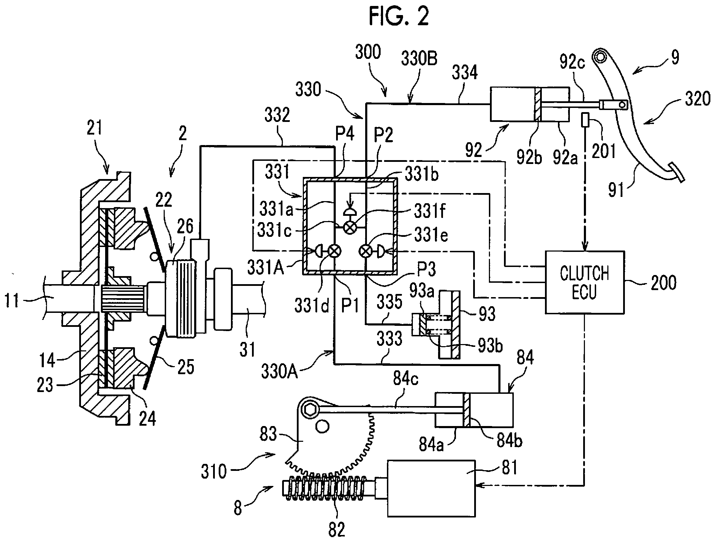

FIG. 2 is a view that shows the overall schematic configuration of a clutch system. As shown in FIG. 2, the clutch device 2 includes a clutch mechanism 21 and a concentric slave cylinder (hereinafter, referred to as CSC) 22. The CSC 22 operates in response to hydraulic pressure (the fluid pressure of working fluid according to the aspect of the invention) that is supplied from a clutch hydraulic circuit 330 (described later), and actuates the clutch mechanism 21.

Specifically, the clutch mechanism 21 includes a clutch disc 23, a pressure plate 24 and a diaphragm spring 25. The CSC 22 includes a release bearing 26.

The clutch disc 23 is spline-fitted to the distal end of an input shaft 31 of the transmission 3. The clutch disc 23 is opposed to a flywheel 14 fixed to the rear end of the crankshaft 11. The pressure plate 24 is arranged between the radially outer portion of the diaphragm spring 25 and the clutch disc 23. The diaphragm spring 25 presses the pressure plate 24 against the clutch disc 23 in a natural state (a state where the diaphragm spring 25 receives no external force). Thus, the diaphragm spring 25 brings the clutch disc 23 into press-contact with the flywheel 14. The release bearing 26 of the CSC 22 is opposed to the radially inner portion of the diaphragm spring 25.

The clutch hydraulic circuit 330 is connected to the CSC 22. The CSC 22 operates so as to engage, release or slidably engage the clutch mechanism 21 by displacing the pressure plate 24 of the clutch mechanism 21 in the axial direction. Specifically, a clutch actuator 8 (described later) operates in accordance with a clutch control signal from a clutch ECU 200. As a result, hydraulic pressure that is supplied from the clutch hydraulic circuit 330 to a hydraulic chamber (fluid pressure chamber; not shown) of the CSC 22 is controlled (working in the case where there is no failure in the clutch actuator 8, or the like (a first operating mechanism 310 (described later)).

In a state where no hydraulic pressure is supplied from the clutch hydraulic circuit 330 to the CSC 22 and the release bearing 26 is placed in a retracted position, the clutch disc 23 is in press-contact with the flywheel 14 under the influence of pressing force from the diaphragm spring 25 (the engaged state of the clutch mechanism 21; the state shown in FIG. 2). In a situation in which there is no failure in the clutch actuator 8, or the like (the clutch actuator 8, or the like, is operating normally), when a clutch releasing command signal is output from the clutch ECU 200 as a clutch control signal, the CSC 22 operates and the release bearing 26 presses the radially inner portion of the diaphragm spring 25 under the influence of hydraulic pressure that is supplied from the clutch hydraulic circuit 330 as a result of the operation of the clutch actuator 8. Thus, the diaphragm spring 25 is reversed, so the pressing force of the pressure plate 24 against the clutch disc 23 is cancelled. As a result, the clutch disc 23 is separated from the flywheel 14, and the clutch mechanism 21 is released (hereinafter, which may be referred to as that the clutch device 2 is released).

On the other hand, when a clutch engaging command signal is output from the clutch ECU 200 as a clutch control signal, supply of hydraulic pressure from the clutch hydraulic circuit 330 resulting from the operation of the clutch actuator 8 is cancelled, and the CSC 22 is actuated to cause the release bearing 26 to retract from the diaphragm spring 25. Thus, the diaphragm spring 25 returns to the natural state, and the pressing force of the pressure plate 24 acts on the clutch disc 23. As a result, the clutch disc 23 is brought into press-contact with the flywheel 14, and the clutch mechanism 21 is engaged (hereinafter, which may also be referred to as that the clutch device 2 is engaged).

In this way, the clutch system is configured as a so-called clutch-by-wire system in which the clutch actuator 8 operates in accordance with a clutch control signal from the clutch ECU 200 and, accordingly, the clutch device 2 shifts between an engaged state and a released state. This clutch-by-wire system is able to appropriately release and engage the clutch device 2 irrespective of driver's operation of a clutch pedal 91. For example, even when the operating speed at which the driver releases depression of the clutch pedal 91 is high, it is possible to engage the clutch device 2 without a shock. Even when the clutch pedal 91 is not being depressed by the driver, the clutch device 2 is allowed to be released, so it is possible to cause the vehicle to perform free running (described later) (coasting in which the vehicle is caused to travel in a state where transmission of power between the engine 1 and the transmission 3 is interrupted.

The output mode of the clutch control signal from the clutch ECU 200 includes a mode in which the clutch control signal is output in accordance with driver's operation of the clutch pedal 91 and a mode in which the clutch control signal is output without driver's operation of the clutch pedal 91. That is, the output mode includes a mode in which a driver's operation amount of the clutch pedal 91 (a depression amount from a state where the clutch pedal 91 is not operated (operation amount "0")) is detected by a clutch pedal stroke sensor 201 (described later) and then the clutch control signal is output from the clutch ECU 200 in accordance with an output signal from the clutch pedal stroke sensor 201 and a mode in which the clutch control signal is output from the clutch ECU 200 without driver's operation of the clutch pedal 91 like the free running. The above operations are performed when there is no failure in the clutch actuator 8, or the like, as described above. Components for dealing with the case where there is a failure in the clutch actuator 8, or the like, and the operation in the event of the failure will be described later.

The transmission 3 is formed of a known manual transmission. The transmission 3 is a constant-mesh type parallel shaft gear mechanism with a synchromesh mechanism, and is able to establish, for example, forward six speed positions and a reverse position. When the driver operates a shift lever 6 (see FIG. 1), the control force of the shift lever 6 activates a predetermined synchromesh mechanism (not shown) via a select cable 61 and a shift cable 62. Thus, a desired speed position (one of the forward six speed positions and reverse position) is established in the transmission 3.

The transmission 3 may be the one in which the control force of the shift lever 6 is transmitted to the synchromesh mechanism via a fork shaft and a shift fork. Alternatively, the transmission 3 may be a so-called automated manual transmission (AMT). In this case, the control system includes an ECT-ECU, and actuators (a selector actuator and a shift actuator) operate such that a desired speed position is established in accordance with a shift control signal that is output from the ECT-ECU as the shift lever is operated by the driver.

Through the shift operation of the transmission 3, the rotation of the engine 1, input to the transmission 3 via the clutch device 2, is changed in speed at a predetermined speed ratio in the transmission 3 and is transmitted to the right and left drive wheels 43 via the differential gear 41 and the drive shafts 42, with the result that the vehicle travels.

As shown in FIG. 2, the clutch system according to the present embodiment is configured such that the clutch device 2, the clutch actuator 8, a clutch pedal unit 9 and a reaction generation mechanism 93 are connected to one another via the clutch hydraulic circuit 330.

The clutch hydraulic circuit 330 includes a switching mechanism 331 as one of characteristics of the present embodiment. A hydraulic chamber in the CSC 22 of the clutch device 2 is connected to the switching mechanism 331 by a CSC-side hydraulic path 332. The clutch actuator 8 (more specifically, a clutch master cylinder 84 of the clutch actuator 8 (described later)) is connected to the switching mechanism 331 by an actuator-side hydraulic path 333. The clutch pedal unit 9 (more specifically, a clutch master cylinder 92 of the clutch pedal unit 9 (described later)) is connected to the switching mechanism 331 by a pedal-side hydraulic path 334. The reaction generation mechanism 93 is connected to the switching mechanism 331 by a reaction generation-side hydraulic path 335.

The switching mechanism 331 is configured such that oil passages are formed inside a casing 331A. Specifically, the oil passages include a first oil passage 331a, a second oil passage 331b and a third oil passage 331c. The first oil passage 331a connects the CSC-side hydraulic path 332 to the actuator-side hydraulic path 333. The second oil passage 331b connects the pedal-side hydraulic path 334 to the reaction generation-side hydraulic path 335. The third oil passage 331c connects these first oil passage 331a and second oil passage 331b to each other.

More specifically, the casing 331A of the switching mechanism 331 has four ports, that is, first to fourth ports P1, P2, P3, P4. The first port P1 and the fourth port P4 are connected to the first oil passage 331a. The second port P2 and the third port P3 are connected to the second oil passage 331b. The first port P1 communicates with the clutch master cylinder 84 of the clutch actuator 8 via the actuator-side hydraulic path 333. The second port P2 communicates with the clutch master cylinder 92 of the clutch pedal unit 9 via the pedal-side hydraulic path 334. The third port P3 communicates with the reaction generation mechanism 93 via the reaction generation-side hydraulic path 335. The fourth port P4 communicates with the hydraulic chamber of the CSC 22 via the CSC-side hydraulic path 332.

A first valve 331d is provided at a location closer to the actuator-side hydraulic path 333 (first port P1) than the connecting location at which the third oil passage 331c is connected to the first oil passage 331a. The first valve 331d is able to open or close. A second valve 331e is provided at a location closer to the reaction generation-side hydraulic path 335 (third port P3) than the connecting location at which the third oil passage 331c is connected to the second oil passage 331b. The second valve 331e is able to open or close. A third valve 331f is provided in the third oil passage 331c. The third valve 331f is able to open or close. Each of these valves 331d, 331e, 331f is constituted of an electromagnetic valve that opens or closes in response to a valve open/close command signal from the clutch ECU 200. As for the open/close statuses of these valves 331d, 331e, 331f, when there is no failure in the clutch actuator 8, or the like (the first operating mechanism 310 (described later)) (when the clutch actuator 8, and the like, are operating normally), the first valve 331d and the second valve 331e each are open, and the third valve 331f is closed. That is, the first oil passage 331a communicates the CSC-side hydraulic path 332 with the actuator-side hydraulic path 333, the second oil passage 331b communicates the pedal-side hydraulic path 334 with the reaction generation-side hydraulic path 335, and the first oil passage 331a and the second oil passage 331b are interrupted from each other.

Since the configuration of the clutch device 2 is described above, the configuration of each of the clutch actuator 8 and the clutch pedal unit 9 will be described below.

The clutch actuator 8 includes an electric motor 81, a worm gear 82, a worm wheel 83 and the clutch master cylinder 84.

The electric motor 81 operates in response to a clutch control signal from the clutch ECU 200. The worm gear 82 is formed with the output shaft of the electric motor 81. The substantially fan-shaped worm wheel 83 is in mesh with the worm gear 82. For this reason, the worm gear 82 rotates (rotates in the forward direction or rotates in the reverse direction) as the electric motor 81 operates, and the worm wheel 83 turns within a predetermined angular range.

The clutch master cylinder 84 is configured such that a piston 84b is installed inside a cylinder body 84a. One end (right-side end in FIG. 2) of a rod 84c is coupled to the piston 84b, and the other end (left-side end in FIG. 2) of the rod 84c is coupled to the worm wheel 83. A coupling location at which the rod 84c is coupled to the worm wheel 83 is set to a location that slightly deviates from the turning center of the worm wheel 83. For this reason, the rod 84c is moved forward or backward as the worm wheel 83 turns.

As the piston 84b receives via the rod 84c turning force based on the turning of the worm wheel 83 resulting from the operation of the electric motor 81, the piston 84b moves inside the cylinder body 84a. Thus, the clutch master cylinder 84 generates hydraulic pressure. Hydraulic pressure that is generated by the clutch master cylinder 84 is changed in response to the stroke position of the piston 84b inside the cylinder body 84a. Specifically, as a clutch releasing command signal is output from the clutch ECU 200, the electric motor 81 operates such that the worm wheel 83 turns in the clockwise direction in the drawing. Thus, in the clutch master cylinder 84, hydraulic pressure is generated as the piston 84b moves forward (moves rightward in the drawing) inside the cylinder body 84a, and the generated hydraulic pressure is supplied to the hydraulic chamber of the CSC 22 via the actuator-side hydraulic path 333, the switching mechanism 331 (the first oil passage 331a of the switching mechanism 331) and the CSC-side hydraulic path 332. As a result, the clutch mechanism 21 is released. On the other hand, as a clutch engaging command signal is output from the clutch ECU 200, the electric motor 81 operates such that the worm wheel 83 turns in the counter-clockwise direction in the drawing. Thus, in the clutch master cylinder 84, the piston 84b moves backward (moves leftward in the drawing) inside the cylinder body 84a, and hydraulic pressure that has been supplied to the hydraulic chamber of the CSC 22 is cancelled. As a result, the clutch mechanism 21 is engaged.

The clutch pedal unit 9 includes the clutch pedal 91 and the clutch master cylinder 92.

The upper end nearby portion of the clutch pedal 91 is turnably supported by a clutch pedal bracket (not shown). Urging force in the turning direction toward the driver is exerted on the clutch pedal 91 by a pedal return spring (not shown). Driver's depression of the clutch pedal 91 is allowed against the urging force of the pedal return spring.

The clutch master cylinder 92 is configured such that a piston 92b is installed inside a cylinder body 92a. One end (left-side end in FIG. 2) of a rod 92c is coupled to the piston 92b, and the other end (right-side end in FIG. 2) of the rod 92c is coupled to the middle portion of the clutch pedal 91.

As the piston 92b receives control force based on the driver's depression of the clutch pedal 91, the piston 92b moves inside the cylinder body 92a. Thus, the clutch master cylinder 92 generates hydraulic pressure. Hydraulic pressure that is generated by the clutch master cylinder 92 is supplied to the reaction generation mechanism 93 via the pedal-side hydraulic path 334, the switching mechanism 331 (the second oil passage 331b of the switching mechanism 331) and the reaction generation-side hydraulic path 335.

The reaction generation mechanism 93 generates reaction force against hydraulic pressure that is supplied via the reaction generation-side hydraulic path 335. The reaction generation mechanism 93 is, for example, configured such that a pressure-receiving piston 93a, a coil spring 93b, and the like, are accommodated inside the reaction generation mechanism 93 and reaction force against the hydraulic pressure is generated by the elastic restoring force of the coil spring 93b. Thus, reaction force against the driver's depression force of the clutch pedal 91 is generated, so the driver is allowed to depress the clutch pedal 91 with a similar depression feeling to the depression of the clutch pedal in an ordinary clutch device (clutch device that does not employ a clutch-by-wire system) or with a control force smaller than that of the ordinary clutch device. That is, the driver depresses the clutch pedal 91 while receiving reaction force from the reaction generation mechanism 93, so the driver operates the clutch pedal 91 without a feeling of strangeness.

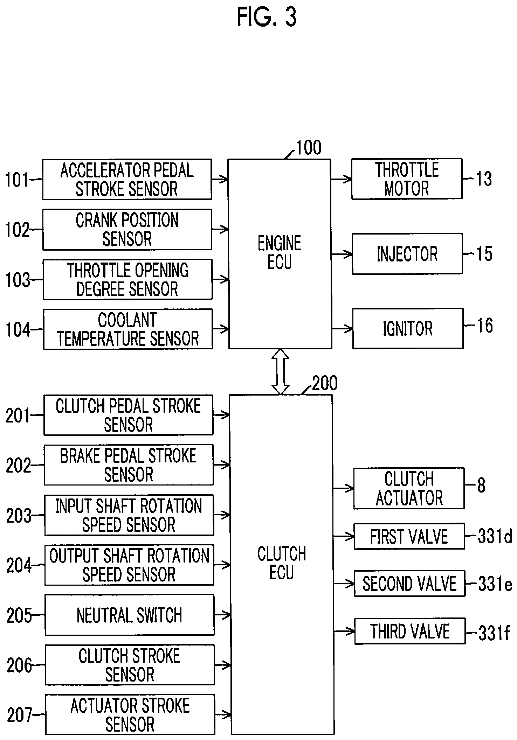

Next, the configuration of a control system associated with the engine ECU 100 and the clutch ECU 200 will be described with reference to FIG. 3.

Each of the engine ECU 100 and the clutch ECU 200 includes a microcomputer and input/output interfaces. The microcomputer includes a CPU, a ROM, a RAM, a backup RAM, and the like.

An accelerator pedal stroke sensor 101, a crank position sensor 102, a throttle opening degree sensor 103, a coolant temperature sensor 104, and the like, are connected to the input interface of the engine ECU 100. The accelerator pedal stroke sensor 101 outputs a signal corresponding to the operation amount of an accelerator pedal 51 (see FIG. 1). The crank position sensor 102 outputs a signal corresponding to the rotational angular position of the crankshaft 11. The throttle opening degree sensor 103 outputs a signal corresponding to the opening degree of a throttle valve 12. The throttle valve 12 is provided in the intake system of the engine 1. The coolant temperature sensor 104 outputs a signal corresponding to the coolant temperature of the engine 1.

A throttle motor 13, an injector 15, an ignitor 16 of an ignition plug, and the like, are connected to the output interface of the engine ECU 100.

The engine ECU 100 detects the operation status of the engine 1 on the basis of various pieces of information, which are input from the sensors, and generally controls the operation of the engine 1 by controlling the throttle motor 13 (intake air amount control), controlling the injector 15 (fuel injection control), controlling the ignitor 16 (ignition timing control), and the like.

A clutch pedal stroke sensor 201, a brake pedal stroke sensor 202, an input shaft rotation speed sensor 203, an output shaft rotation speed sensor 204, a neutral switch 205, a clutch stroke sensor 206, an actuator stroke sensor 207, and the like, are connected to the input interface of the clutch ECU 200. The clutch pedal stroke sensor 201 outputs a signal corresponding to the operation amount of the clutch pedal 91. The brake pedal stroke sensor 202 outputs a signal corresponding to the operation amount of a brake pedal 53. The input shaft rotation speed sensor 203 outputs a signal corresponding to the input shaft rotation speed of the transmission 3. The output shaft rotation speed sensor 204 outputs a signal corresponding to the output shaft rotation speed of the transmission 3. The neutral switch 205 detects that the operating position of the shift lever 6 is a neutral position. The clutch stroke sensor 206 detects a clutch stroke in the clutch device 2 (the clutch stroke sensor 206, for example, detects the slide position of the release bearing 26 of the CSC 22). The actuator stroke sensor 207 detects the clutch stroke of the clutch actuator 8 (the actuator stroke sensor 207, for example, detects the slide position of the rod 84c).

The clutch actuator 8, the valves 331d, 331e, 331f, and the like, are connected to the output interface of the clutch ECU 200.

The engine ECU 100 and the clutch ECU 200 are connected by a bidirectional bus so as to carry out communication for bidirectionally transmitting or receiving required information to or from each other.

### Coasting

The vehicle according to the present embodiment is able to perform free running. This free running indicates a state where the vehicle coasts by releasing the clutch device 2 while the vehicle is traveling. Since braking force caused by a drag of the engine 1 (so-called engine brake) is not generated in this free running, it is possible to extend a coasting travel distance, so it is possible to improve the fuel consumption rate of the engine 1. The traveling status in this free running includes the case where the engine 1 is driven (driven at about idling rotation speed) (which may also be referred to as idle coasting) and the case where the engine 1 is stopped (the rotation speed of the engine 1 is set to "0" by stopping fuel injection from the injector 15 and stopping the ignition operation of the ignition plug.

A free-running start condition is satisfied when, while the vehicle is traveling, the state where none of the accelerator pedal 51, the brake pedal 53 and the clutch pedal 91 is depressed (the state where the operation amount is "0" or substantially "0") continues for a predetermined time (for example, about 3 seconds) and a vehicle speed is higher than or equal to a predetermined value. In addition to these conditions, the fact that the steering angle of a steering wheel is smaller than a predetermined angle may be included in the free-running start condition. A free-running stop condition is satisfied when at least one of the accelerator pedal 51, the brake pedal 53 and the clutch pedal 91 is depressed or when the vehicle speed becomes lower than a predetermined value, while the vehicle is performing free running. Alternatively, the fact that the steering angle of the steering wheel becomes larger than or equal to a predetermined angle may be set for the free-running stop condition.

Control to start or stop the free running (free-running control) is executed by the engine ECU 100 and the clutch ECU 200. For this reason, in these ECUs 100, 200, a functional unit that executes the free-running control is configured as a coasting control unit (a coasting control unit that releases a clutch device by operating a clutch actuator when a predetermined coasting start condition is satisfied while the vehicle is traveling in a state where the clutch device is engaged) according to the aspect of the invention.

Incidentally, in the existing clutch-by-wire system described in JP 2012-112499 A, if there is a failure in the clutch actuator, the clutch pedal stroke sensor, or the like (if there is an abnormality in the operation of the clutch actuator), the clutch device is not able to operate in response to the operation amount of the clutch pedal. For example, if there is a failure in a state where no hydraulic pressure is supplied to the clutch device (in a state where the clutch device is engaged), it is not possible to release the clutch device even when the driver depresses the clutch pedal. Alternatively, if there is a failure in a state where hydraulic pressure is supplied to the clutch device (in a state where the clutch device is released), it is not possible to engage the clutch device even when the driver cancels depression of the clutch pedal.

In order to suppress the behavior of the vehicle, not intended by the driver, in the case where there occurs a situation in which the clutch device cannot be released, the efficiency of a reduction mechanism constituted of the worm gear and the worm wheel is conventionally decreased in advance in the clutch actuator. However, if such a mechanism of decreasing the efficiency (generally called self-lock mechanism) is provided, the thrust of the clutch actuator tends to decrease, so the size of the electric motor 81 needs to be increased in order to increase the thrust. Since it is required to increase the reduction ratio of the reduction mechanism, this configuration leads to an increase in the size of the reduction mechanism.

The present embodiment is contemplated in view of this point, and allows the clutch device 2 to operate in response to the operation amount of the clutch pedal 91 even when there is an abnormality in the operation of the clutch actuator 8. The present embodiment is intended to reduce the size of the clutch actuator 8 by eliminating the necessity to provide the clutch actuator 8 with a self-lock mechanism.

Specifically, when there is no failure in the clutch actuator 8, the clutch pedal stroke sensor 201, or the like (when there is no abnormality in the operation of the clutch actuator 8), both the first valve 331d and second valve 331e of the switching mechanism 331 are opened, and the third valve 331f is closed, as described above. That is, the fourth port P4 is caused to communicate with only the first port P1 among the ports, and the second port P2 is caused to communicate with only the third port P3 among the ports. Thus, the first oil passage 331a communicates the CSC-side hydraulic path 332 with the actuator-side hydraulic path 333, and the second oil passage 331b communicates the pedal-side hydraulic path 334 with the reaction generation-side hydraulic path 335. In this case, as described above, it is possible to operate the clutch device 2 by supplying the hydraulic chamber of the CSC 22 with hydraulic pressure that is generated by the clutch master cylinder 84 as a result of the operation of the clutch actuator 8.

On the other hand, when there is a failure in the clutch actuator 8, the clutch pedal stroke sensor 201, or the like (when there is an abnormality in the operation of the clutch actuator 8), both the first valve 331d and the second valve 331e are closed, and the third valve 331f is opened. That is, the fourth port P4 is caused to communicate with only the second port P2 among the ports, and each of the first port P1 and the third port P3 is interrupted from any of the other ports. Thus, the third oil passage 331c communicates the CSC-side hydraulic path 332 with the pedal-side hydraulic path 334, and each of the actuator-side hydraulic path 333 and the reaction generation-side hydraulic path 335 is interrupted from any of the other hydraulic paths. In this case, it is possible to operate the clutch device 2 by supplying the hydraulic chamber of the CSC 22 with hydraulic pressure that is generated by the clutch master cylinder 92 in response to driver's control force on the clutch pedal 91.

With such a configuration, a first operating mechanism 310 is constituted of the clutch actuator 8 and the clutch hydraulic circuit 330 (the actuator-side hydraulic path 333 and the CSC-side hydraulic path 332). That is, when there is no failure in the clutch actuator 8, the clutch pedal stroke sensor 201, or the like, the clutch device 2 is operated by adjusting hydraulic pressure that is supplied to the hydraulic chamber of the CSC 22 with the use of the first operating mechanism 310. In this way, the first operating mechanism 310 operates the clutch device 2 by adjusting hydraulic pressure (fluid pressure) through the operation of the clutch actuator 8. For this reason, the actuator-side hydraulic path 333 and the CSC-side hydraulic path 332 constitute a first path 330A (a first path that adjusts fluid pressure by causing working fluid to flow into or out of a fluid pressure chamber through the operation of the clutch actuator) according to the aspect of the invention.

On the other hand, the clutch pedal unit 9 and the clutch hydraulic circuit 330 (the pedal-side hydraulic path 334 and the CSC-side hydraulic path 332) constitute a second operating mechanism 320. That is, when there is a failure in the clutch actuator 8, the clutch pedal stroke sensor 201, or the like, the clutch device 2 is operated by adjusting hydraulic pressure that is supplied to the hydraulic chamber of the CSC 22 with the use of the second operating mechanism 320. In this way, the second operating mechanism 320 operates the clutch device 2 by supplying the clutch device 2 with hydraulic pressure (fluid pressure) that is obtained from driver's control force on the clutch pedal 91. For this reason, the pedal-side hydraulic path 334 and the CSC-side hydraulic path 332 constitute a second path 330B (a second path that adjusts fluid pressure by causing working fluid to flow into or out of the fluid pressure chamber with the use of control force on the clutch pedal) according to the aspect of the invention.

In this way, with the above-described open/close operation of each of the valves 331d, 331e, 331f, the switching mechanism 331 is switched so as to change the hydraulic paths (paths of working fluid) in the clutch hydraulic circuit 330 between a state where the clutch device 2 is operated by the first operating mechanism 310 and a state where the clutch device 2 is operated by the second operating mechanism 320. In other words, the switching mechanism 331 is able to switch the path for working fluid to communicate with the hydraulic chamber (fluid pressure chamber) of the CSC 22 between the first path 330A and the second path 330B.

The switching operation of the switching mechanism 331 is executed by the clutch ECU 200. For this reason, in the clutch ECU 200, a functional unit that executes switching control over the switching mechanism 331 is configured as a controller (a controller that, when the controller determines that there is an abnormality in the operation of the clutch actuator, controls a switching mechanism such that the path for working fluid to communicate with the fluid pressure chamber is switched from a first path to a second path) according to the aspect of the invention.

In this way, the clutch actuator 8, the clutch pedal 91, the paths 330A, 330B, the reaction generation mechanism 93, the switching mechanism 331 and the controller (clutch ECU 200) for switching the switching mechanism 331, and the like, constitute a clutch operating apparatus (a clutch operating apparatus that operates the clutch device 2 between the engaged state and the released state) 300 according to the aspect of the invention.

A "third path (third path that causes working fluid to flow into or out of a reaction generation mechanism with the use of control force on the clutch pedal)" according to the aspect of the invention corresponds to the pedal-side hydraulic path 334 and the reaction generation-side hydraulic path 335.

In the present embodiment, when the free running has continued for the predetermined time after the free running is started, working oil is enclosed in the CSC-side hydraulic path 332 by closing both the first valve 331d and the third valve 331f and opening the second valve 331e. Thus, free running is continued by maintaining the released state of the clutch device 2 without continuing the operation of the clutch actuator 8 (the operation of the clutch actuator 8 for maintaining hydraulic pressure that is supplied to the clutch device 2).

Control in the case where the free running has continued for the predetermined time is executed by the clutch ECU 200. For this reason, a functional unit is that executes this control in the clutch ECU 200 according to the aspect of the invention (a coasting switching unit that, when coasting has continued for a predetermined time after the coasting is started, switches the switching mechanism such that the first path is interrupted).

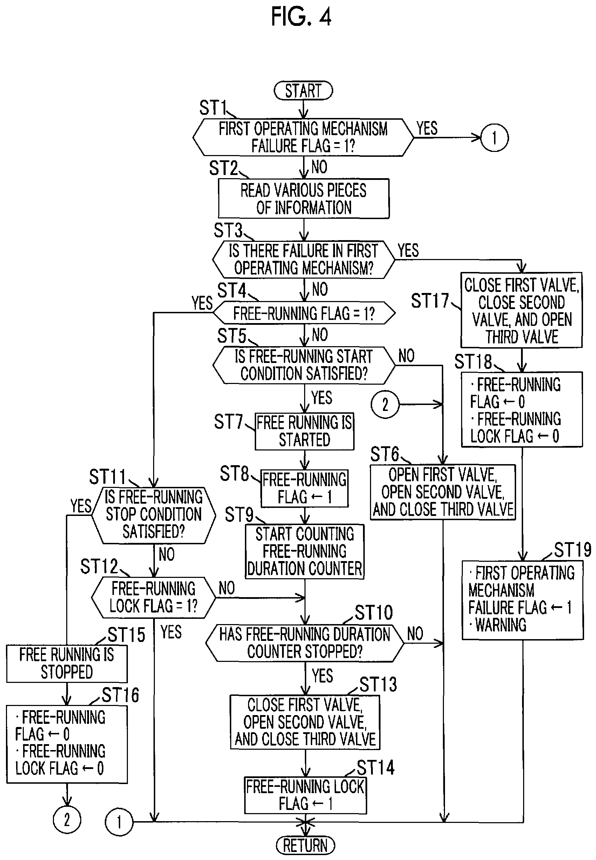

Next, the procedure of the above-described switching operation of the switching mechanism 331 will be described with reference to the flowchart of FIG. 4. This flowchart is repeatedly executed at predetermined time intervals. Before the vehicle starts traveling (for example, at a start of the engine 1), each of flags (described later) is reset to "0".

Initially, in step ST1, it is determined whether a first operating mechanism failure flag prestored in the clutch ECU 200 is set to "1". The first operating mechanism failure flag is set to "1" when it is determined that there is a failure in the first operating mechanism 310.

Since the first operating mechanism failure flag is reset to "0" before the vehicle starts traveling, negative determination is made in step ST1, and the process proceeds to step ST2. In step ST2, the above-described various pieces of information (output signals) from the sensors are read. For example, information about the operation amount of the accelerator pedal 51 from the accelerator pedal stroke sensor 101, information about the operation amount of the clutch pedal 91 from the clutch pedal stroke sensor 201, information about the operation amount of the brake pedal 53 from the brake pedal stroke sensor 202, information about the clutch stroke of the clutch device 2 from the clutch stroke sensor 206, information about the clutch stroke of the clutch actuator 8 from the actuator stroke sensor 207, and the like, are read.

After that, the process proceeds to step ST3, and it is determined whether there is a failure in the first operating mechanism 310. As an example of this determination, when the vehicle is not performing free running, the operation amount of the clutch pedal 91, obtained on the basis of an output signal from the clutch pedal stroke sensor 201, is compared with the clutch stroke in the clutch device 2, obtained on the basis of an output signal from the clutch stroke sensor 206. When there is a deviation that exceeds an allowable range between these operation amount and clutch stroke, there is a possibility of occurrence of a failure in the clutch actuator 8 or a failure in the clutch pedal stroke sensor 201. Therefore, it is determined that there is a failure in the first operating mechanism 310, and then affirmative determination is made in step ST3. The allowable range of the deviation between the operation amount and the clutch stroke is set in advance by experiment or simulation. When the vehicle is not performing free running, the operation amount of the clutch pedal 91, obtained on the basis of an output signal from the clutch pedal stroke sensor 201, is compared with the clutch stroke of the clutch actuator 8, obtained on the basis of an output signal from the actuator stroke sensor 207. When there is a deviation that exceeds an allowable range between these operation amount and clutch stroke, it may be determined that there is a failure, and affirmative determination may be made in step ST3.

This determination operation is allowed to be carried out in a situation in which the operation amount of the clutch pedal 91 has slightly changed. For example, when the driver has started depressing the clutch pedal 91, it is determined whether there is a failure on the basis of output signals from the sensors at the time when the depression amount has reached about 20% of the total depression amount (a depression rate of 100%) of the clutch pedal 91. That is, it is determined whether there is a failure in a state where the margin of depression of the clutch pedal 91 is still remaining. This is because, as will be described later, in the case of shifting from the state where the clutch device 2 is operated by the first operating mechanism 310 to the state where the clutch device 2 is operated by the second operating mechanism 320, generation of hydraulic pressure resulting from depression (depression increasing operation) of the clutch pedal 91 (hydraulic pressure for releasing the clutch device 2; hydraulic pressure that is generated by the clutch master cylinder 92) is enabled.

It may be determined whether there is a failure in the first operating mechanism 310 by comparing the clutch control signal that is output to the clutch actuator 8 with the clutch stroke of the clutch device 2, obtained on the basis of an output signal from the clutch stroke sensor 206, or the clutch stroke of the clutch actuator 8, obtained on the basis of an output signal from the actuator stroke sensor 207. With this determination operation, it is possible to determine whether there is a failure in the first operating mechanism 310 irrespective of whether the vehicle is performing free running.

When there is no failure in the first operating mechanism 310 and negative determination is made in step ST3, the process proceeds to step ST4. In step ST4, it is determined whether a free-running flag prestored in the clutch ECU 200 is set to "1". The free-running flag is set to "1" at the time when the free running is started, and is set to "0" at the time when the free running is stopped (cancelled).

Since the free-running flag is reset to "0" at the time when the vehicle starts traveling, negative determination is made in step ST4, and then the process proceeds to step ST5. In step ST5, it is determined whether the free-running start condition is satisfied. As described above, the free-running start condition is satisfied when the state where, while the vehicle is traveling, none of the accelerator pedal 51, the brake pedal 53 and the clutch pedal 91 is depressed (the state where the operation amount is "0" or substantially "0") continues for the predetermined time (for example, about 3 seconds) and the vehicle speed is higher than or equal to the predetermined value. The operation amount of the accelerator pedal 51 is obtained on the basis of an output signal from the accelerator pedal stroke sensor 101. The operation amount of the brake pedal 53 is obtained on the basis of an output signal from the brake pedal stroke sensor 202. The operation amount of the clutch pedal 91 is obtained on the basis of an output signal from the clutch pedal stroke sensor 201. The vehicle speed is calculated on the basis of an output signal from the output shaft rotation speed sensor 204.

Since the accelerator pedal 51 is generally operated for the purpose of accelerating the vehicle or the clutch pedal 91 is generally operated in order to shift the transmission 3 at the time when the vehicle starts traveling, the free-running start condition is not satisfied, so negative determination is made in step ST5, and then the process proceeds to step ST6. In step ST6, both the first valve 331d and the second valve 331e are opened, and the third valve 331f is closed, after which the process is returned. That is, as described above, the first oil passage 331a communicates the CSC-side hydraulic path 332 with the actuator-side hydraulic path 333, the second oil passage 331b communicates the pedal-side hydraulic path 334 with the reaction generation-side hydraulic path 335, and the first oil passage 331a and the second oil passage 331b are interrupted from each other. That is, the clutch device 2 is operated by the first operating mechanism 310. For this reason, in a situation in which there is no failure in the first operating mechanism 310 (negative determination is made in step ST3), the operations of step ST1 to step ST6 are repeated until the free-running start condition is satisfied (until affirmative determination is made in step ST5), and the state where the clutch device 2 is operated by the first operating mechanism 310 is continued.

When the free-running start condition is satisfied and affirmative determination is made in step ST5, the process proceeds to step ST7. In step ST7, free running is started. That is, the clutch device 2 is released when the clutch releasing command signal is output from the clutch ECU 200 (which corresponds to the operation of the coasting control unit according to the aspect of the invention, and corresponds to an operation to release the clutch device by operating the clutch actuator when a predetermined coasting start condition is satisfied while the vehicle is traveling in a state where the clutch device is engaged in a situation in which the clutch device is operated while the first path is caused to communicate with the fluid pressure chamber). In addition, a target rotation speed of the engine 1 is set to about an idle rotation speed or the engine 1 is stopped. After that, the process proceeds to step ST8, and the free-running flag is set to "1".

After free running is started in this way, the process proceeds to step ST9. In step ST9, a free-running duration counter prestored in the clutch ECU 200 starts counting. A time that elapses until the free-running duration counter stops (time is up) is set on the basis of experiment or simulation in advance. For example, the time is set to about 5 seconds.

After the free-running duration counter starts counting in this way, the process proceeds to step ST10. In step ST10, it is determined whether the free-running duration counter has stopped. Since the free-running duration counter has not stopped yet at the time when the free-running duration counter starts counting, negative determination is made in step ST10, and then the process is directly returned.

In the next routine, when the first operating mechanism failure flag is "0" (negative determination is made in step ST1) and there is no failure in the first operating mechanism 310 (negative determination is made in step ST3), the free-running flag is set to "1" in the last routine, so affirmative determination is made in step ST4, and the process proceeds to step ST11. In step ST11, it is determined whether a free-running stop condition is satisfied. As described above, when the accelerator pedal 51, the brake pedal 53 or the clutch pedal 91 has been depressed, or when the vehicle speed becomes lower than the predetermined value, the free-running stop condition is satisfied, and affirmative determination is made in step ST11.

When the free-running stop condition is not satisfied yet and negative determination is made in step ST11, the process proceeds to step ST12. In step ST12, it is determined whether a free-running lock flag prestored in the clutch ECU 200 is set to "1". The free-running lock flag is set to "1" at the time of being switched to the state where both the first valve 331d and the third valve 331f are closed during the free running and working oil is enclosed in the CSC-side hydraulic path 332 (hereinafter, this state is referred to as free-running lock state). The free-running lock flag is set to "0" at the time when free-running lock is cancelled.

Since the free-running lock flag is reset to "0" at the time when the vehicle starts traveling, negative determination is made in step ST12, and then the process proceeds to step ST10. In step ST10, it is determined whether the free-running duration counter has stopped as described above. In a situation in which there is no failure in the first operating mechanism 310 (negative determination is made in step ST3) and the free-running stop condition is not satisfied (negative determination is made in step ST11), the operations of step ST1 to step ST4, step ST11, step ST12 and step ST10 are repeated until the free-running duration counter stops (until affirmative determination is made in step ST10).

When the free-running duration counter has stopped and affirmative determination is made in step ST10, the process proceeds to step ST13. In step ST13, the first valve 331d is closed, the second valve 331e is opened, and the third valve 331f is closed. That is, as described above, the vehicle is placed in a free-running lock state (which corresponds to an operation that is performed by a coasting switching unit according to the aspect of the invention, and which corresponds to an operation to switch the switching mechanism such that the first path is interrupted when coasting has continued for a predetermined time after the coasting is started). In this free-running lock state, since hydraulic pressure inside the CSC-side hydraulic path 332 is held, it is possible to continue free running while the released state of the clutch device 2 is maintained without continuing the operation of the clutch actuator 8 (the operation of the electric motor 81 for holding hydraulic pressure inside the CSC-side hydraulic path 332). That is, since a hydraulic pressure holding state made by using the driving force of the electric motor 81 of the clutch actuator 8 is allowed to be cancelled, it is possible to significantly reduce electric power consumed by the electric motor 81.

After the vehicle is placed in the free-running lock state in step ST13, the process proceeds to step ST14. In step ST14, the free-running lock flag is set to "1".

After the vehicle is placed in the free-running lock state in this way, in the next routine, when there is no failure in the first operating mechanism 310 and the free-running stop condition is not satisfied, affirmative determination is made in step ST12. That is, the free-running lock state is maintained, and the operations of step ST1 to step ST4, step ST11 and step ST12 are repeated.

When the free-running stop condition is satisfied, affirmative determination is made in step ST11, and the process proceeds to step ST15. In step ST15, free running is stopped. That is, the clutch engaging command signal is output from the clutch ECU 200, and the clutch device 2 is engaged. The rotation speed of the engine 1 is controlled so as to be commensurate with the operation amount of the accelerator pedal 51, obtained on the basis of an output signal from the accelerator pedal stroke sensor 101. After that, the process proceeds to step ST16. In step ST16, both the free-running flag and the free-running lock flag are reset to "0", and then the process proceeds to step ST6. As described above, in step ST6, both the first valve 331d and the second valve 331e are opened, and the third valve 331f is closed, and then the process is returned. That is, as described above, the first oil passage 331a communicates the CSC-side hydraulic path 332 with the actuator-side hydraulic path 333, the second oil passage 331b communicates the pedal-side hydraulic path 334 with the reaction generation-side hydraulic path 335, and the first oil passage 331a and the second oil passage 331b are interrupted from each other. That is, the clutch device 2 is operated by the first operating mechanism 310.

On the other hand, when there is a failure in the first operating mechanism 310, affirmative determination is made in step ST3, and then the process proceeds to step ST17. In step ST17, both the first valve 331d and the second valve 331e are closed, and the third valve 331f is opened. That is, the third oil passage 331c communicates the first oil passage 331a (the fourth port P4-side oil passage of the first oil passage 331a with respect to the first valve 331d) with the second oil passage 331b (the second port P2-side oil passage of the second oil passage 331b with respect to the second valve 331e). That is, the CSC-side hydraulic path 332 communicates with the pedal-side hydraulic path 334. In addition, the CSC-side hydraulic path 332 and the actuator-side hydraulic path 333 are interrupted from each other, and the pedal-side hydraulic path 334 and the reaction generation-side hydraulic path 335 are interrupted from each other.

In this case, the switching timing of the valves 331d, 331e, 331f is to switch each of the valves 331d, 331e, 331f at the same time. Alternatively, the first valve 331d may be switched (the first valve 331d is closed) in advance of the second valve 331e or the third valve 331f. In this case, when the CSC-side hydraulic path 332 and the actuator-side hydraulic path 333 are interrupted from each other in advance, the other valves 331e, 331f are switched in a state where the hydraulic pressure in the CSC-side hydraulic path 332 is once held. Therefore, it is possible to reduce fluctuations in hydraulic pressure, with the result that it is possible to stabilize the torque capacity of the clutch device 2.

In a state where the valves 331d, 331e, 331f are switched in this way, the clutch device 2 is operated by the second operating mechanism 320. That is, by supplying the clutch device 2 with hydraulic pressure that is obtained from the driver's control force on the clutch pedal 91, the clutch device 2 is allowed to be operated. In this way, even in the event of a failure (at the time when there is a failure in the first operating mechanism 310), the clutch device 2 is able to work in response to the operation amount of the clutch pedal 91.

After that, the process proceeds to step ST18. In step ST18, the free-running flag and the free-running lock flag are reset to "0", and then the process proceeds to step ST19. In step ST19, the first operating mechanism failure flag is set to "1". The driver is warned (warning that there is a failure in the first operating mechanism 310) by lighting up a MIL (warning lamp) on a meter panel inside a vehicle cabin, failure information is written into a diagnosis provided in the clutch ECU 200, and then the process is returned.

In the next routine, since the first operating mechanism failure flag is set to "1" in the last routine, affirmative determination is made in step ST1, and then the process is directly returned. That is, the state where both the first valve 331d and the second valve 331e are closed and the third valve 331f is opened is maintained, and the state where the MIL on the meter panel is lit up is maintained.

The above-described operations are repeated at predetermined time intervals.

When the first operating mechanism failure flag is set to "1" and the MIL is lit up as described above, the vehicle is driven to a car dealer, a repair shop, or the like, and maintenance of the first operating mechanism 310 is performed. At this time, at the end of the maintenance, the first operating mechanism failure flag is reset to "0" through worker's data rewriting operation on the clutch ECU 200.

Since the above-described operations are executed, the operation of step ST17 (the switching operation of each of the valves 331d, 331e, 331f) corresponds to the operation of the controller according to the aspect of the invention, and corresponds to an operation to control the switching mechanism such that the path for working fluid to communicate with the fluid pressure chamber is switched from the first path to the second path when the controller determines that there is an abnormality in the operation of the clutch actuator.

As described above, in the present embodiment, when it is determined that there is an abnormality in the operation of the clutch actuator 8, the switching mechanism 331 is controlled so as to switch the path for working fluid to communicate with the hydraulic chamber (fluid pressure chamber) of the CSC 22 from the first path 330A to the second path 330B, and the path for working oil is changed from the state where the clutch device 2 is operated by the first operating mechanism 310 to the state where the clutch device 2 is operated by the second operating mechanism 320. Thus, it is possible to supply the clutch device 2 with hydraulic pressure (fluid pressure) that is obtained from driver's control force on the clutch pedal 91, so the clutch device 2 is allowed to be operated. That is, even when there is an abnormality in the operation of the clutch actuator 8, the clutch device 2 is allowed to work in response to the operation amount of the clutch pedal 91.

For example, when there is an abnormality in the operation of the clutch actuator 8 at the time when the vehicle stars moving, the start of the vehicle is not disabled or the behavior of the vehicle, not intended by the driver, does not occur. When there is an abnormality in the operation of the clutch actuator 8 while the vehicle is traveling, acceleration of the vehicle is not disabled, the shift of the transmission 3 is not disabled (an operation of the shift lever 6 from a certain shift position to a neutral position is not disabled) or gear noise does not occur at the time of shift operation (when the shift lever 6 is allowed to be operated to the neutral position, gear noise does not occur at the time of operating the shift lever 6 from the neutral position to an intended shift position).

As described above, during free running, it is possible to reduce electric power consumed by the electric motor 81 by placing the vehicle in the free-running lock state through the switching operation of the switching mechanism 331. For this reason, it is possible to provide the clutch operating apparatus 300 that is able to enhance the practical utility of the clutch system (clutch-by-wire system) including the clutch actuator 8.

As described above, when there occurs an abnormality in the operation of the clutch actuator 8, it is possible to operate the clutch device 2 with the use of the second operating mechanism 320 through the switching operation of the switching mechanism 331, so it is not required to provide the clutch actuator 8 with the self-lock mechanism. That is, it is not required to decrease the efficiency of the reduction mechanism constituted of the worm gear 82 and the worm wheel 83 in the clutch actuator 8. For this reason, the thrust of the clutch actuator 8 increases, the response of the clutch device 2 (the response of operation between the engaged state and the released state) increases, and the size of the clutch actuator 8 is reduced.

When it is determined that there is no abnormality in the operation of the clutch actuator 8, the switching mechanism 331 communicates the hydraulic pressure supply path (the pedal-side hydraulic path 334 and the reaction generation-side hydraulic path 335; the third path) between the clutch pedal 91 and the reaction generation mechanism 93. Thus, as described above, it is possible to generate reaction force against driver's control force on the clutch pedal 91 with the use of the reaction generation mechanism 93. Therefore, the driver depresses the clutch pedal 91 while receiving the reaction force, with the result that the driver is allowed to operate the clutch pedal 91 without a feeling of strangeness. On the other hand, when it is determined that there is an abnormality in the operation of the clutch actuator 8, the switching mechanism 331 interrupts the hydraulic pressure supply path (the third path) between the clutch pedal 91 and the reaction generation mechanism 93. Thus, since reaction force from the reaction generation mechanism 93 does not act on the clutch pedal 91, driver's control force on the clutch pedal 91 may be set to necessary minimum force for operating the clutch device 2, with the result that deterioration of operability is suppressed.

### Alternative Embodiment

Next, an alternative embodiment will be described. The present alternative embodiment differs from the above-described embodiment in the configuration of a switching mechanism. The other components and operations are similar to those of the above-described embodiment, so only the components and operations of the switching mechanism will be described.

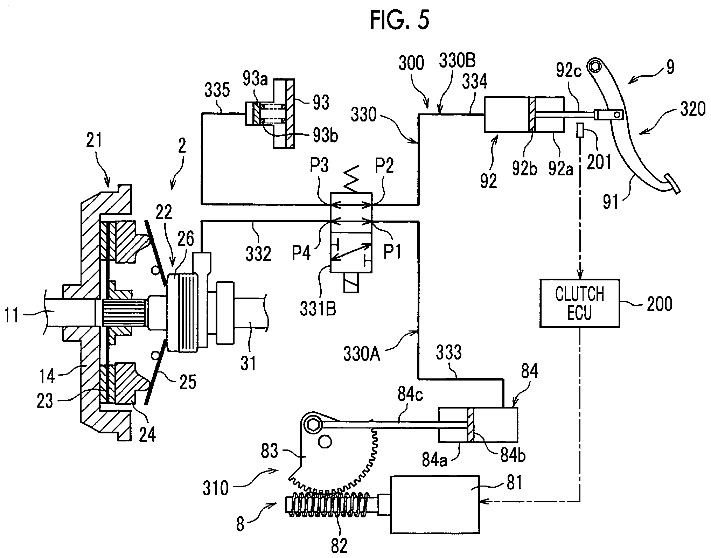

FIG. 5 is a view that shows the overall schematic configuration of a clutch system according to the present alternative embodiment. As shown in FIG. 5, in the clutch system, the switching mechanism is constituted of a switching valve 331B that is a four-port two-position control valve. The switching valve 331B, as well as the switching mechanism 331 according to the above-described embodiment, includes four first to fourth ports P1, P2, P3, P4.

As in the case of the above-described embodiment, the first port P1 communicates with the clutch master cylinder 84 of the clutch actuator 8 via the actuator-side hydraulic path 333, the second port P2 communicates with the clutch master cylinder 92 of the clutch pedal unit 9 via the pedal-side hydraulic path 334, the third port P3 communicates with the reaction generation mechanism 93 via the reaction generation-side hydraulic path 335, and the fourth port P4 communicates with the hydraulic chamber of the CSC 22 via the CSC-side hydraulic path 332.

The valve position of a spool valve element is electrically switched by a solenoid between a first switching position and a second switching position. In the first switching position (the position to which the spool valve element has moved downward as shown in FIG. 5), the first port P1 and the fourth port P4 communicate with each other, and the second port P2 and the third port P3 communicate with each other. Thus, the CSC-side hydraulic path 332 and the actuator-side hydraulic path 333 communicate with each other, and the pedal-side hydraulic path 334 and the reaction generation-side hydraulic path 335 communicate with each other. On the other hand, in the second switching position (the position to which the spool valve element has moved upward in FIG. 5), the second port P2 and the fourth port P4 communicate with each other, and each of the first port P1 and the third port P3 is interrupted from any of the other ports. Thus, the CSC-side hydraulic path 332 and the pedal-side hydraulic path 334 communicate with each other.

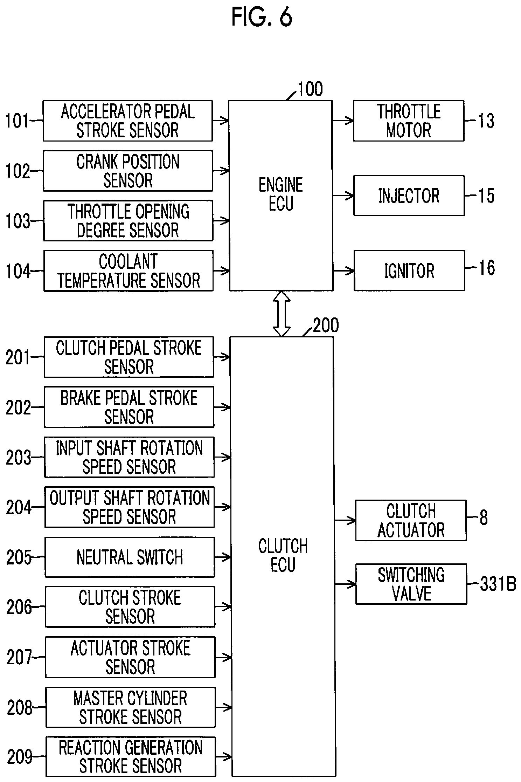

FIG. 6 shows the configuration of a control system associated with the engine ECU 100 and the clutch ECU 200 according to the present alternative embodiment. In the present embodiment, in addition to the configuration of the above-described embodiment, a master cylinder stroke sensor 208 and a reaction generation stroke sensor 209 are connected to the input interface of the clutch ECU 200. The master cylinder stroke sensor 208 outputs a signal corresponding to the stroke (for example, the positon of the piston 92b) of the clutch master cylinder 92. The reaction generation stroke sensor 209 outputs a signal corresponding to the position of the pressure-receiving piston 93a of the reaction generation mechanism 93.

In the present alternative embodiment, determination as to whether there is a failure in the first operating mechanism 310 is carried out on the basis of the operation amount of the clutch pedal 91, obtained on the basis of an output signal from the clutch pedal stroke sensor 201, the clutch stroke of the clutch device 2, obtained on the basis of an output signal from the clutch stroke sensor 206, the clutch stroke of the clutch actuator 8, obtained on the basis of an output signal from the actuator stroke sensor 207, the stroke of the clutch master cylinder 92, obtained on the basis of an output signal from the master cylinder stroke sensor 208, and the position of the pressure-receiving piston 93a, obtained on the basis of an output signal from the reaction generation stroke sensor 209. That is, when there is no failure in the first operating mechanism 310, there is no deviation that exceeds a predetermined allowable range among pieces of information obtained on the basis of output signals from these sensors since there is a correlation among these pieces of information. For this reason, when there is a deviation that exceeds the predetermined allowable range among these pieces of information, it is determined that there is a failure in the first operating mechanism 310. The allowable range of a deviation among the pieces of information is set by experiment or simulation in advance.

When there is no failure in the first operating mechanism 310, the switching valve 331B is placed in the first switching position, and the clutch device 2 is operated by the first operating mechanism 310. That is, the path for working fluid to communicate with the hydraulic chamber (fluid pressure chamber) of the CSC 22 is set to the first path 330A. On the other hand, when there is a failure in the first operating mechanism 310, the switching valve 331B is placed in the second switching position, and the clutch device 2 is operated by the second operating mechanism 320. That is, the path for working fluid to communicate with the hydraulic chamber (fluid pressure chamber) of the CSC 22 is set to the second path 330B. The other components and operations are similar to those of the above-described embodiment.

According to the present alternative embodiment as well, similar advantageous effects to those of the above-described embodiment are obtained.

### Other Embodiments

The invention is not limited to only the above-described embodiment and the alternative embodiment. The invention encompasses all modifications and applications that are included in the scope of the appended claims and the scope of equivalents of the appended claims.

For example, in the above-described embodiment and alternative embodiment, the invention is applied to the FF vehicle. Instead, the invention may also be applied to a front-engine rear-drive (FR) vehicle or a mid-engine vehicle. An example in which the transmission 3 is a forward six-speed transmission is described; however, the invention is not limited to this configuration. The number of speeds may be selectively set.

In the above-described embodiment and alternative embodiment, the case where the internal combustion engine is a gasoline engine is described. The invention is not limited to this configuration. The internal combustion engine may be another internal combustion engine, such as a diesel engine.

In the above-described embodiment and alternative embodiment, the worm gear 82 and the worm wheel 83 are provided as the reduction mechanism of the clutch actuator 8. The invention is not limited to this configuration. A configuration including another type of reduction mechanism may be employed.

In the above-described embodiment and alternative embodiment, the clutch device 2 that operates with the use of the CSC 22 is described. The invention is not limited to this configuration. The invention may also be applied to a known release fork clutch device that moves a release bearing with a release fork.

The invention is applicable to control for a vehicle that is able to perform free running by releasing a clutch device.

## Claims

1. A clutch operating apparatus (300) configured to operate a clutch device (2) between an engaged state and a released state by adjusting a fluid pressure inside a fluid pressure chamber of the clutch device (2), the clutch device (2) being arranged in a power transmission path between an engine (1) and a transmission (3), the clutch operating apparatus (300) comprising:
a clutch actuator (8);
a clutch pedal (91) configured to be operated by a driver;
a first path (330A) configured to adjust the fluid pressure by causing working fluid to flow into or out of the fluid pressure chamber through an operation of the clutch actuator (8); **characterized in that** the clutch operating apparatus (300) comprises
a second path (330B) configured to adjust the fluid pressure by causing working fluid to flow into or out of the fluid pressure chamber with the use of control force on the clutch pedal (91);
a switching mechanism (331) configured to switch a path for working fluid to communicate with the fluid pressure chamber between the first path (330A) and the second path (330B); and
an electronic control unit (200) configured to control the switching mechanism (331) such that the path for working fluid to communicate with the fluid pressure chamber is switched from the first path (330A) to the second path (330B), when the electronic control unit (200) determines that there is an abnormality in the operation of the clutch actuator (8).

2. The clutch operating apparatus (300) according to claim 1, further comprising:
a reaction generation mechanism (93) configured to use the flow of working fluid to generate a reaction force against control force on the clutch pedal (91); and
a third path (334, 335) configured to cause working fluid to flow into or out of the reaction generation mechanism (93) with the use of control force on the clutch pedal (91), wherein
the switching mechanism (331) is configured to switch the third path (334,335) between a communication state and an interruption state, and
the electronic control unit (200) is configured to control the switching mechanism (331) such that the third path (334, 335) is switched from the communication state to the interruption state, when the electronic control unit (200) determines that there is an abnormality in the operation of the clutch actuator (8).

3. The clutch operating apparatus according to claim 2, wherein
the switching mechanism (331) includes a first port (P1), a second port (P2), a third port (P3), and a fourth port (P4),
the first port (P1) is connected to the clutch actuator (8) via a path for working fluid,
the second port (P2) is connected to the clutch pedal (91) via a path for working fluid,
the third port (P3) is connected to the reaction generation mechanism (93) via a path for working fluid,
the fourth port (P4) is connected to the fluid pressure chamber of the clutch device (2) via a path for working fluid,
the electronic control unit (200) is configured to, when the electronic control unit (200) determines that there is no abnormality in the operation of the clutch actuator (8), cause the fourth port (P4) to communicate with the first port (P1) and cause the second port (P2) to communicate with the third port (3), and
the electronic control unit (200) is configured to, when the electronic control unit (200) determines that there is an abnormality in the operation of the clutch actuator (8), cause the fourth port (P4) to communicate with the second port (P2) and interrupt each of the first port (P1) and the third port (P3) from any of the other ports.

4. The clutch operating apparatus (300) according to any one of claims 1 to 3, wherein
the electronic control unit (200) is configured to release the clutch device (2) by operating the clutch actuator (8), when a predetermined coasting start condition is satisfied when a vehicle is traveling under a situation in which the clutch device is engaged when the clutch device (2) is operated while the first path (330A) is communicated with the fluid pressure chamber, and
the electronic control unit (200) is configured to switch the switching mechanism (331) such that the first path (330A) is interrupted, when coasting has continued for a predetermined time after the coasting of the vehicle is started.

5. The clutch operating apparatus (300) according to claims 2 or 3, further comprising:
a clutch pedal stroke sensor (201) configured to output a signal corresponding to an operation amount of the clutch pedal;
a clutch stroke sensor (206) configured to output a signal corresponding to a clutch stroke of the clutch device;
an actuator stroke sensor (207) configured to output a signal corresponding to a clutch stroke of the clutch actuator;
a master cylinder stroke sensor (208) configured to output a signal corresponding to a stroke of a clutch master cylinder (92) connected to the clutch pedal; and
a reaction generation stroke sensor (209) configured to output a signal corresponding to a stroke of the reaction generation mechanism, wherein
the electronic control unit (200) is configured to, when there is a deviation that exceeds a predetermined allowable range among signals output from each of stroke sensors, determine that there is an abnormality in the operation of the clutch actuator (8).

6. A control method for a clutch operating apparatus (300) configured to operate a clutch device (2) between an engaged state and a released state by adjusting a fluid pressure inside a fluid pressure chamber of the clutch device, the clutch device being arranged in a power transmission path between an engine (1) and a transmission (3), the clutch operating apparatus (300) including:
a clutch actuator (8);
a clutch pedal (91) configured to be operated by a driver;
a first path (330A) configured to adjust the fluid pressure by causing working fluid to flow into or out of the fluid pressure chamber through an operation of the clutch actuator (8);
a second path (330B) configured to adjust the fluid pressure by causing working fluid to flow into or out of the fluid pressure chamber with the use of control force on the clutch pedal (91);
a switching mechanism (331) configured to switch a path for working fluid to communicate with the fluid pressure chamber between the first path (330A) and the second path (330B); and
an electronic control unit (200),
the control method comprising
controlling, by the electric control unit (200), the switching mechanism (331) such that the path for working fluid to communicate with the fluid pressure chamber is switched from the first path (330A) to the second path (330B), when the electronic control unit (200) determines that there is an abnormality in the operation of the clutch actuator (8).

## Patentansprüche

1. Kupplungsbetätigungsvorrichtung (300), die dazu ausgestaltet ist, eine Kupplungseinrichtung (2) zwischen einem eingerückten Zustand und einem gelösten Zustand durch Einstellen eines Fluiddrucks im Inneren einer Fluiddruckkammer der Kupplungseinrichtung (2) zu betätigen, wobei die Kupplungseinrichtung (2) in einem Energieübertragungspfad zwischen einem Motor (1) und einem Getriebe (3) angeordnet ist, wobei die Kupplungsbetätigungsvorrichtung (300) umfasst:
einen Kupplungsaktuator (8),
ein Kupplungspedal (91), das dazu ausgestaltet ist, von einem Fahrer betätigt zu werden,
einen ersten Pfad (330A), der dazu ausgestaltet ist, den Fluiddruck einzustellen, indem bewirkt wird, dass Arbeitsfluid durch eine Betätigung des Kupplungsaktuators (8) in die Fluiddruckkammer hinein- oder aus dieser herausfließt, **dadurch gekennzeichnet, dass** die Kupplungsbetätigungsvorrichtung (300) umfasst
einen zweiten Pfad (330B), der dazu ausgestaltet ist, den Fluiddruck einzustellen, indem bewirkt wird, dass Arbeitsfluid unter Verwendung von Steuerkraft auf das Kupplungspedal (91) in die Fluiddruckkammer hinein- oder aus dieser herausfließt,
einen Umschaltmechanismus (331), der dazu ausgestaltet ist, einen Pfad für Arbeitsfluid umzuschalten, um mit der Fluiddruckkammer zwischen dem ersten Pfad (330A) und dem zweiten Pfad (330B) zu kommunizieren, und
eine elektronische Steuereinheit (200), die dazu ausgestaltet ist, den Umschaltmechanismus (331) derart zu steuern, dass der Pfad für Arbeitsfluid zur Kommunikation mit der Fluiddruckkammer von dem ersten Pfad (330A) auf den zweiten Pfad (330B) umgeschaltet wird, wenn die elektronische Steuereinheit (200) feststellt, dass eine Anomalie im Betrieb des Kupplungsaktuators (8) vorliegt.

2. Kupplungsbetätigungsvorrichtung (300) nach Anspruch 1, ferner umfassend:
einen Reaktionserzeugungsmechanismus (93), der dazu ausgestaltet ist, den Fluss von Arbeitsfluid zu verwenden, um eine Reaktionskraft gegen eine Steuerkraft auf das Kupplungspedal (91) zu erzeugen, und
einen dritten Pfad (334, 335), der dazu ausgestaltet ist, zu bewirken, dass Arbeitsfluid unter Verwendung von Steuerkraft auf das Kupplungspedal (91) in den Reaktionserzeugungsmechanismus (93) hinein- oder aus diesem herausfließt, wobei
der Umschaltmechanismus (331) dazu ausgestaltet ist, den dritten Pfad (334, 335) zwischen einem Kommunikationszustand und einem Trennungszustand umzuschalten, und
die elektronische Steuereinheit (200) dazu ausgestaltet ist, den Umschaltmechanismus (331) derart zu steuern, dass der dritte Pfad (334, 335) von dem Kommunikationszustand auf den Trennungszustand umgeschaltet wird, wenn die elektronische Steuereinheit (200) feststellt, dass eine Anomalie im Betrieb des Kupplungsaktuators (8) vorliegt.

3. Kupplungsbetätigungsvorrichtung nach Anspruch 2, wobei
der Umschaltmechanismus (331) einen ersten Anschluss (P1), einen zweiten Anschluss (P2), einen dritten Anschluss (P3) und einen vierten Anschluss (P4) beinhaltet,
der erste Anschluss (P1) über einen Pfad für Arbeitsfluid mit dem Kupplungsaktuator (8) verbunden ist,
der zweite Anschluss (P2) über einen Pfad für Arbeitsfluid mit dem Kupplungspedal (91) verbunden ist,
der dritte Anschluss (P3) über einen Pfad für Arbeitsfluid mit dem Reaktionserzeugungsmechanismus (93) verbunden ist,
der vierte Anschluss (P4) über einen Pfad für Arbeitsfluid mit der Fluiddruckkammer der Kupplungseinrichtung (2) verbunden ist,
die elektronische Steuereinheit (200) dazu ausgestaltet ist, wenn die elektronische Steuereinheit (200) feststellt, dass keine Anomalie im Betrieb des Kupplungsaktuators (8) vorliegt, zu bewirken, dass der vierte Anschluss (P4) mit dem ersten Anschluss (P1) kommuniziert, und bewirkt, dass der zweite Anschluss (P2) mit dem dritten Anschluss (3) kommuniziert, und
die elektronische Steuereinheit (200) dazu ausgestaltet ist, wenn die elektronische Steuereinheit (200) feststellt, dass eine Anomalie im Betrieb des Kupplungsaktuators (8) vorliegt, zu bewirken, dass der vierte Anschluss (P4) mit dem zweiten Anschluss (P2) kommuniziert und jeweils den ersten Anschluss (P1) und den dritten Anschluss (P3) von einem beliebigen der anderen Anschlüsse trennt.

4. Kupplungsbetätigungsvorrichtung (300) nach einem der Ansprüche 1 bis 3, wobei
die elektronische Steuereinheit (200) dazu ausgestaltet ist, die Kupplungseinrichtung (2) durch Betätigen des Kupplungsaktuators (8) zu lösen, wenn eine vorbestimmte Ausrollstartbedingung erfüllt ist, wenn ein Fahrzeug in einer Situation fährt, in der die Kupplungseinrichtung eingerückt ist, wenn die Kupplungseinrichtung (2) betätigt wird, während der erste Pfad (330A) mit der Fluiddruckkammer kommuniziert, und
die elektronische Steuereinheit (200) dazu ausgestaltet ist, den Umschaltmechanismus (331) derart umzuschalten, dass der erste Pfad (330A) getrennt wird, wenn das Ausrollen nach dem Start des Ausrollens des Fahrzeugs für eine vorbestimmte Zeit weitergegangen ist.

5. Kupplungsbetätigungsvorrichtung (300) nach den Ansprüchen 2 oder 3, ferner umfassend:
einen Kupplungspedalhubsensor (201), der dazu ausgestaltet ist, ein Signal auszugeben, das einem Betätigungsbetrag des Kupplungspedals entspricht,
einen Kupplungshubsensor (206), der dazu ausgestaltet ist, ein Signal auszugeben, das einem Kupplungshub der Kupplungseinrichtung entspricht,
einen Aktuatorhubsensor (207), der dazu ausgestaltet ist, ein Signal auszugeben, das einem Kupplungshub des Kupplungsaktuators entspricht,
einen Hauptzylinderhubsensor (208), der dazu ausgestaltet ist, ein Signal auszugeben, das einem Hub eines mit dem Kupplungspedal verbundenen Kupplungshauptzylinders (92) entspricht, und
einen Reaktionserzeugungshubsensor (209), der dazu ausgestaltet ist, ein Signal auszugeben, das einem Hub des Reaktionserzeugungsmechanismus entspricht, wobei
die elektronische Steuereinheit (200) dazu ausgestaltet ist, wenn eine Abweichung vorliegt, die einen vorbestimmten zulässigen Bereich unter Signalen überschreitet, die von jedem der Hubsensoren ausgegebenen werden, festzustellen, dass eine Anomalie im Betrieb des Kupplungsaktuators (8) vorliegt.

6. Steuerverfahren für eine Kupplungsbetätigungsvorrichtung (300), die dazu ausgestaltet ist, eine Kupplungseinrichtung (2) zwischen einem eingerückten Zustand und einem gelösten Zustand durch Einstellen eines Fluiddrucks im Inneren einer Fluiddruckkammer der Kupplungseinrichtung zu betätigen, wobei die Kupplungseinrichtung in einem Energieübertragungspfad zwischen einem Motor (1) und einem Getriebe (3) angeordnet ist, wobei die Kupplungsbetätigungsvorrichtung (300) beinhaltet:
einen Kupplungsaktuator (8),
ein Kupplungspedal (91), das dazu ausgestaltet ist, von einem Fahrer betätigt zu werden,
einen ersten Pfad (330A), der dazu ausgestaltet ist, den Fluiddruck einzustellen, indem bewirkt wird, dass Arbeitsfluid durch eine Betätigung des Kupplungsaktuators (8) in die Fluiddruckkammer hinein- oder aus dieser herausfließt,
einen zweiten Pfad (330B), der dazu ausgestaltet ist, den Fluiddruck einzustellen, indem bewirkt wird, dass Arbeitsfluid unter Verwendung von Steuerkraft auf das Kupplungspedal (91) in die Fluiddruckkammer hinein- oder aus dieser herausfließt,
einen Umschaltmechanismus (331), der dazu ausgestaltet ist, einen Pfad für Arbeitsfluid umzuschalten, um mit der Fluiddruckkammer zwischen dem ersten Pfad (330A) und dem zweiten Pfad (330B) zu kommunizieren, und
eine elektronische Steuereinheit (200),
wobei das Steuerverfahren umfasst
Steuern des Umschaltmechanismus (331) durch die elektronische Steuereinheit (200) derart, dass der Pfad für Arbeitsfluid zur Kommunikation mit der Fluiddruckkammer von dem ersten Pfad (330A) auf den zweiten Pfad (330B) umgeschaltet wird, wenn die elektronische Steuereinheit (200) feststellt, dass eine Anomalie im Betrieb des Kupplungsaktuators (8) vorliegt.

## Revendications

1. Appareil d'actionnement d'embrayage (300) configuré pour actionner un dispositif d'embrayage (2) entre un état engagé et un état relâché en ajustant une pression de fluide à l'intérieur d'une chambre de pression de fluide du dispositif d'embrayage (2), le dispositif d'embrayage (2) étant disposé dans un passage de transmission de puissance entre un moteur (1) et une transmission (3), l'appareil d'actionnement d'embrayage (300) comportant :
un dispositif d'actionnement d'embrayage (8) ;
une pédale d'embrayage (91) configurée pour être actionnée par un conducteur ;
un premier passage (330A) configuré pour ajuster la pression de fluide en amenant du fluide de travail à s'écouler dans ou hors de la chambre de pression de fluide par l'intermédiaire d'un fonctionnement du dispositif d'actionnement d'embrayage (8) ; **caractérisé en ce que** l'appareil d'actionnement d'embrayage (300) comporte
un deuxième passage (330B) configuré pour ajuster la pression de fluide en amenant du fluide de travail à s'écouler dans ou hors de la chambre de pression de fluide avec l'utilisation d'une force de commande sur la pédale d'embrayage (91) ;
un mécanisme de commutation (331) configuré pour commuter un passage pour que du fluide de travail communique avec la chambre de pression de fluide entre le premier passage (330A) et le deuxième passage (330B) ; et
une unité de commande électronique (200) configurée pour commander le mécanisme de commutation (331) de telle sorte que le passage pour que du fluide de travail communique avec la chambre de pression de fluide est commuté du premier passage (330A) au deuxième passage (330B), quand l'unité de commande électronique (200) détermine qu'il y a une anomalie dans le fonctionnement du dispositif d'actionnement d'embrayage (8).

2. Appareil d'actionnement d'embrayage (300) selon la revendication 1, comportant en outre :
un mécanisme de génération de réaction (93) configuré pour utiliser l'écoulement de fluide de travail pour générer une force de réaction à l'encontre d'une force de commande sur la pédale d'embrayage (91) ; et
un troisième passage (334, 335) configuré pour amener du fluide de travail à s'écouler dans ou hors du mécanisme de génération de réaction (93) avec l'utilisation d'une force de commande sur la pédale d'embrayage (91), dans lequel
le mécanisme de commutation (331) est configuré pour commuter le troisième passage (334, 335) entre un état de communication et un état d'interruption, et
l'unité de commande électronique (200) est configurée pour commander le mécanisme de commutation (331) de telle sorte que le troisième passage (334, 335) est commuté de l'état de communication à l'état d'interruption, quand l'unité de commande électronique (200) détermine qu'il y a une anomalie dans le fonctionnement du dispositif d'actionnement d'embrayage (8).

3. Appareil d'actionnement d'embrayage selon la revendication 2, dans lequel
le mécanisme de commutation (331) comprend un premier orifice (P1), un deuxième orifice (P2), un troisième orifice (P3), et un quatrième orifice (P4),
le premier orifice (P1) est connecté au dispositif d'actionnement d'embrayage (8) par l'intermédiaire d'un passage pour du fluide de travail,
le deuxième orifice (P2) est connecté à la pédale d'embrayage (91) par l'intermédiaire d'un passage pour du fluide de travail,
le troisième orifice (P3) est connecté au mécanisme de génération de réaction (93) par l'intermédiaire d'un passage pour du fluide de travail,
le quatrième orifice (P4) est connecté à la chambre de pression de fluide du dispositif d'embrayage (2) par l'intermédiaire d'un passage pour du fluide de travail,
l'unité de commande électronique (200) est configurée pour, quand l'unité de commande électronique (200) détermine qu'il n'y a pas d'anomalie dans le fonctionnement du dispositif d'actionnement d'embrayage (8), amener le quatrième orifice (P4) à communiquer avec le premier orifice (P1) et amener le deuxième orifice (P2) à communiquer avec le troisième orifice (P3), et
l'unité de commande électronique (200) est configurée pour, quand l'unité de commande électronique (200) détermine qu'il y a une anomalie dans le fonctionnement du dispositif d'actionnement d'embrayage (8), amener le quatrième orifice (P4) à communiquer avec le deuxième orifice (P2) et interrompre chacun du premier orifice (P1) et du troisième orifice (P3) de l'un quelconque des autres orifices.

4. Appareil d'actionnement d'embrayage (300) selon l'une quelconque des revendications 1 à 3, dans lequel
l'unité de commande électronique (200) est configurée pour relâcher le dispositif d'embrayage (2) en actionnant le dispositif d'actionnement d'embrayage (8), quand une condition de début de marche sur la lancée prédéterminée est satisfaite quand un véhicule se déplace dans une situation dans laquelle le dispositif d'embrayage est engagé quand le dispositif d'embrayage (2) est actionné alors que le premier passage (330A) est en communication avec la chambre de pression de fluide, et
l'unité de commande électronique (200) est configurée pour commuter le mécanisme de commutation (331) de telle sorte que le premier passage (330A) est interrompu, quand une marche sur la lancée a continué pendant un temps prédéterminé après que la marche sur la lancée du véhicule soit commencée.

5. Appareil d'actionnement d'embrayage (300) selon les revendications 2 ou 3, comportant en outre :
un capteur de course de pédale d'embrayage (201) configuré pour délivrer un signal correspondant à une quantité d'actionnement de la pédale d'embrayage ;
un capteur de course d'embrayage (206) configuré pour délivrer un signal correspondant à une course d'embrayage du dispositif d'embrayage ;
un capteur de course de dispositif d'actionnement (207) configuré pour délivrer un signal correspondant à une course d'embrayage du dispositif d'actionnement d'embrayage ;
un capteur de course de maître-cylindre (208) configuré pour délivrer un signal correspondant à une course d'un maître-cylindre d'embrayage (92) relié à la pédale d'embrayage ; et
un capteur de course de génération de réaction (209) configuré pour délivrer un signal correspondant à une course du mécanisme de génération de réaction, dans lequel
l'unité de commande électronique (200) est configurée pour, quand il y a un écart qui dépasse une plage admissible prédéterminée parmi des signaux délivrés par chacun des capteurs de course, déterminer qu'il y a une anomalie dans le fonctionnement du dispositif d'actionnement d'embrayage (8).

6. Procédé de commande pour un appareil d'actionnement d'embrayage (300) configuré pour actionner un dispositif d'embrayage (2) entre un état engagé et un état relâché en ajustant une pression de fluide à l'intérieur d'une chambre de pression de fluide du dispositif d'embrayage, le dispositif d'embrayage étant disposé dans un passage de transmission de puissance entre un moteur (1) et une transmission (3), l'appareil d'actionnement d'embrayage (300) comprenant :
un dispositif d'actionnement d'embrayage (8) ;
une pédale d'embrayage (91) configurée pour être actionnée par un conducteur ;
un premier passage (330A) configuré pour ajuster la pression de fluide en amenant du fluide de travail à s'écouler dans ou hors de la chambre de pression de fluide par l'intermédiaire d'un fonctionnement du dispositif d'actionnement d'embrayage (8) ;
un deuxième passage (330B) configuré pour ajuster la pression de fluide en amenant du fluide de travail à s'écouler dans ou hors de la chambre de pression de fluide avec l'utilisation d'une force de commande sur la pédale d'embrayage (91) ;
un mécanisme de commutation (331) configuré pour commuter un passage pour que du fluide de travail communique avec la chambre de pression de fluide entre le premier passage (330A) et le deuxième passage (330B) ; et
une unité de commande électronique (200),
le procédé de commande comportant le fait de
commander, grâce à l'unité de commande électronique (200), le mécanisme de commutation (331) de telle sorte que le passage pour que du fluide de travail communique avec la chambre de pression de fluide est commuté du premier passage (330A) au deuxième passage (330B), quand l'unité de commande électronique (200) détermine qu'il y a une anomalie dans le fonctionnement du dispositif d'actionnement d'embrayage (8).
